**Europäisches Patentamt**

**European Patent Office**

**Office européen des brevets**

(19)

(11) Veröffentlichungsnummer: **0 161 428**
**B1**

(12) # EUROPÄISCHE PATENTSCHRIFT

(45) Veröffentlichungstag der Patentschrift:
**03.06.87**

(51) Int. Cl.⁴: **F 16 L  3/16,** B 60 K  13/04

(21) Anmeldenummer: **85103376.1**

(22) Anmeldetag: **22.03.85**

(54) **Aufhängevorrichtung für eine Abgasanlage eines Kraftwagens.**

(30) Priorität: **07.04.84  DE 3413138**

(43) Veröffentlichungstag der Anmeldung:
**21.11.85 Patentblatt 85/47**

(45) Bekanntmachung des Hinweises auf die Patenterteilung:
**03.06.87 Patentblatt 87/23**

(84) Benannte Vertragsstaaten:
**AT BE CH FR GB IT LI LU NL SE**

(56) Entgegenhaltungen:
**DE - A - 2 621 771**
**DE - A - 3 322 364**
**FR - A - 2 325 531**

(73) Patentinhaber: **H.J.S. Fahrzeugteile-Fabrik GmbH & Co.,**
**Iserlohner Landstrasse 119, D-5750 Menden (DE)**

(72) Erfinder: **Schulte, Hermann J., Meierfrankenfeldstrasse**
**42, D-5750 Menden 2 (DE)**
Erfinder: **Kraft, Franz, Dipl.-Ing., Stumpfstrasse 5,**
**D-5760 Arnsberg 16 (DE)**

(74) Vertreter: **Schröter, Martin, Dipl.-Ing., Im Tückwinkel 22,**
**D-5860 Iserlohn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Aufhängevorrichtung für eine Abgasanlage eines Kraftwagens, bestehend aus jeweils einem am Fahrzeugaufbau und an der Abgasanlage starr angebrachten, im Querschnitt etwa U-förmigen Tragteil, einem die Tragteile verbindenden Tragring aus elastischem Werkstoff und aus zwischen freie Bereiche belassenden Anschlägen an den Tragteilen wirkenden elastischen Abstützmitteln.

Bekannt ist eine solche Aufhängevorrichtung aus der DE-A 33 22 364. Die beiden Tragteile, die im Querschnitt etwa U-förmig ausgebildet sind, werden durch einen im Querschnitt kreisförmigen elastischen Ring verbunden. Zur Verhinderung seitlicher Pendelbewegungen der Abgasanlage bzw. des Schalldämpfers ist um den Tragring ein engumschliessender weiterer Stützring aus elastischem Werkstoff vorgesehen, der mit nach aussen bzw. nach innen abgewinkelten Anschlägen an den Schenkeln der Tragteile zusammenwirkt.

Bei einer solchen Aufhängevorrichtung ist zwar die Abgasanlage elastisch am Fahrzeugaufbau abgehangen, auch werden mögliche seitliche Pendelbewegungen über den Stützring gedämpft, jedoch erweist sich die Montage der beiden elastischen Ringe in der Praxis bei den beängten Verhältnissen unter einem Fahrzeug als noch relativ schwierig.

Die Aufgabe der Erfindung besteht darin, eine Aufhängevorrichtung für eine Abgasanlage eines Kraftwagens der eingangs genannten Art vorzuschlagen, die einfacher zu montieren ist, jedoch mit einer gleichwertigen Abstützung der elastischen Tragteilverbindung das mögliche seitliche Pendeln des Schalldämpfers verhindert.

Gelöst wird die Erfindungsaufgabe mit einer Aufhängevorrichtung mit sämtlichen Merkmalen des Anspruches 1.

Wie bei der bekannten Vorrichtung lässt sich bei der Erfindung nach dem einfachen Aufstecken der Abstützplatte der Tragring leicht am fahrzeugseitigen Tragteil aufstülpen. An der Tragplatte ist bereits der Abstützpuffer gehalten, so dass lediglich das lose anlageseitige Tragteil entsprechend in den Tragring einzubringen ist, so dass sich dieses Tragteil abstützend zwischen dem Tragring und dem zwischengesetzten Abstützpuffer befindet. Sämtliche zwischen den beiden Tragteilen zu übertragenden Abstützkräfte werden bei dieser Aufhängevorrichtung mittig vom Abstützpuffer aufgenommen bzw. gedämpft bzw. elastisch übertragen. Diese erfindungsgemässe Aufhängevorrichtung lässt sich an den fahrzeugseitig vorhandenen Tragteilen praxisbekannter Art ohne weitere Umrüstung einsetzen.

Nach einer bevorzugten Ausführungsart der Erfindung ist die zusätzlich vorzusehende Abstützplatte an ihrer Rückseite mit zwei parallelen Schenkeln versehen, die sich vorzugsweise mit einer Rastverbindung zwischen den Schenkeln des fahrzeugseitigen Tragteiles anbringen lassen. An der Platte wird der plattenartige Abstützpuffer vorzugsweise durch eine Noppenverbindung gehalten.

Anhand eines abgebildeten Ausführungsbeispieles wird die Erfindung im folgenden näher erläutert. Es zeigen:

Figur 1 eine Aufhängevorrichtung für einen Schalldämpfer eines Kraftfahrzeuges in der Vorderansicht,

Figur 2 einen Schnitt nach der Linie I-I in Figur I, und

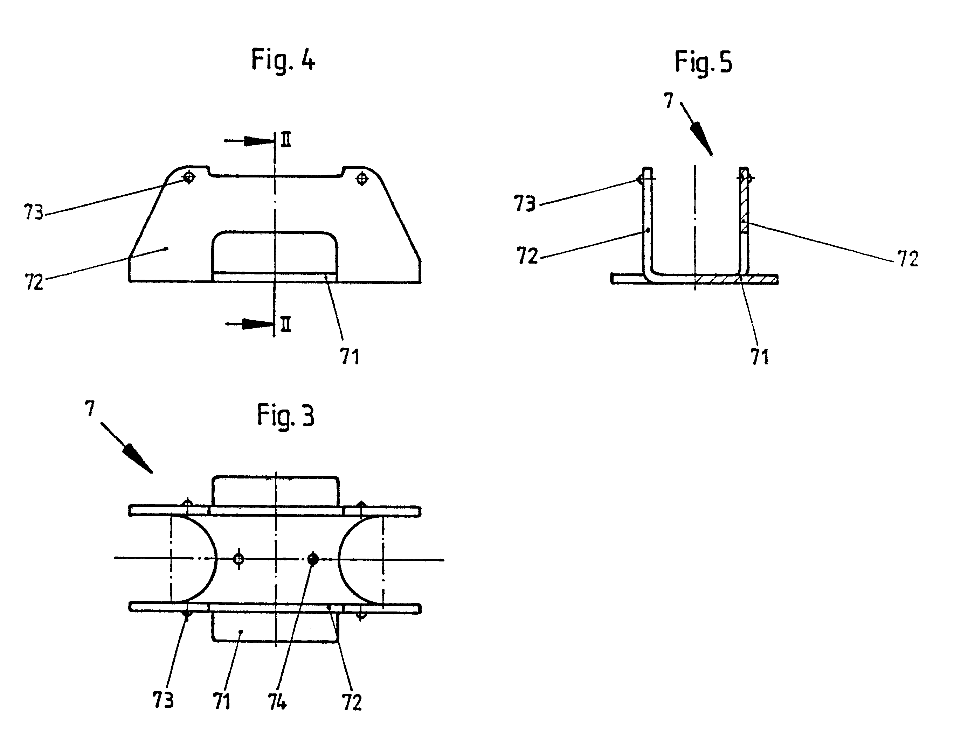

Figuren 3-5 teilweise geschnittene Ansichten der aus Platte und Schenkeln bestehenden Abstützvorrichtungen.

An bekannten Fahrzeugen sind am Fahrzeugaufbau 1 im Querschnitt etwa U-förmige Tragteile 2 starr befestigt, die im wesentlichen aus dem Steg 21 und den beiden Schenkeln 22 bestehen, an denen nach aussen abgewinkelte Anschläge 23 vorgesehen sind.

Mit diesen Tragteilen 2 ist das anlageseitige Tragteil 4 elastisch zu verbinden, an dem beispielsweise die Halteschelle 3 für einen Schalldämpfer einer Abgasanlage gehalten ist. Auch dieses Tragteil 4 besitzt im Querschnitt etwa U-Form und wird gebildet aus dem Steg 41 und dem Schenkel 42, an dem wiederum nach innen gerichtete Anschläge 43 abgewinkelt sind.

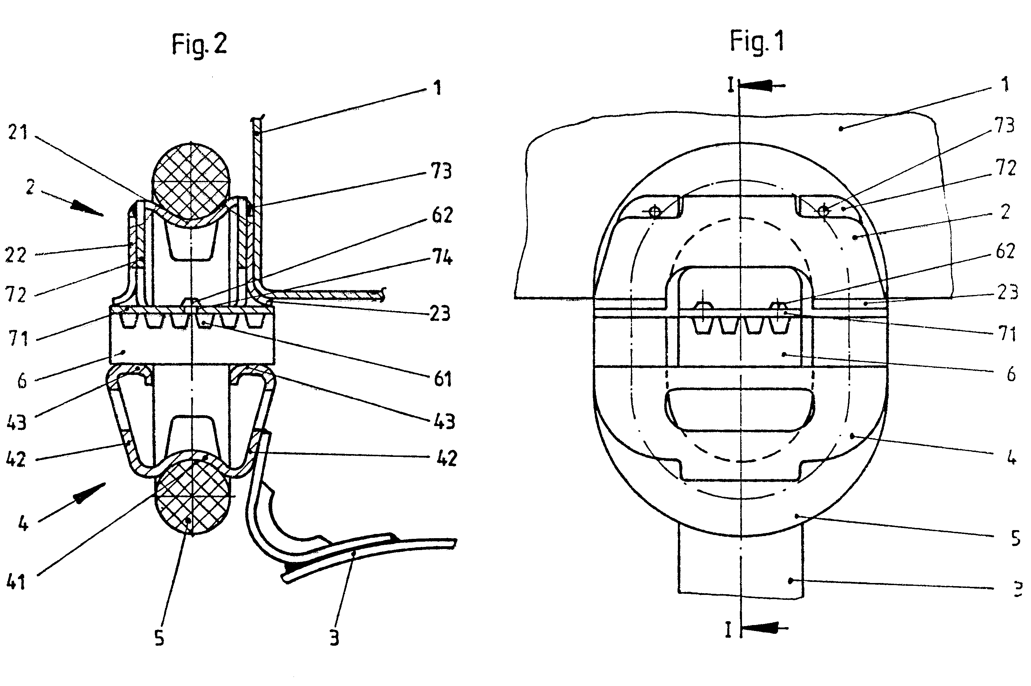

In senkrechter Richtung werden die beiden Tragteile 2 bzw. 4 durch einen elastischen Tragring 5 miteinander verbunden, der sich den entsprechend ausgebildeten Stegen 21 bzw. 41 anschmiegt. Die elastische Festsetzung der beiden Tragteile 2 und 4 in Achsrichtung des Ringes 5 erfolgt über den zwischensetzbaren elastischen plattenförmigen Abstützpuffer 6. Dieser Puffer 6 ist aufgenommen an einer Platte 71 der insgesamt mit der Ziffer 7 bezeichneten Abstützvorrichtung. Zur Beeinflussung der Federkennlinie eines solchen Puffers 6 weist er an seiner Befestigungsseite Strukturelemente 61 auf. Die Befestigung erfolgt über angeformte Noppen 62, die verrastend durch Bohrungen 74 in der Platte 71 greifen. An der Platte 71 sind rückseitig zwei zueinander parallele Schenkel 72 angeformt, die zwischen den Schenkeln 22 des fahrzeugseitigen Tragteiles 2 eingeschoben sind. An den Schenkeln 72 aussen angeformte Nocken 73 verrasten die Vorrichtung 7 an den Oberkanten der Schenkel 22 des Tragteiles 2. Die Abstützung des Teiles 7 nach oben erfolgt im Tragteil 2 örtlich gelagert zwischen den Nocken 73. Die Gegenseite des Abstützpuffers 6 ruht im montierten Zustand, wie er aus Figur 2 ersichtlich ist, an den Anschlägen 43 des Tragteiles 4.

Bei möglichen Pendelbewegungen der Abgasanlage wirken der elastische Tragring 5 und der mittig zwischen den Tragteilen 2 und 4 angeordnete Abstützpuffer 6 zusammen und verhindern bei entsprechender Bewegung dämpfend die mögliche Berührung von Metallteilen. Sämtliche Kräfte werden mittig zwischen den beiden Tragteilen elastisch gedämpft übertragen.

*Zusammenstellung der Bezugszeichen*

1  Fahrzeugaufbau

2  Tragteil
21  Steg
22  Schenkel
23  Anschlag
3  Halteschelle

4  Tragteil
41  Steg
42  Schenkel
43  Anschlag

5  Tragring

6  Abstützpuffer
61  Strukturelemente
62  Befestigungsnoppen

7  Abstützvorrichtung
71  Platte
72  Schenkel
73  Nocken
74  Bohrung

## Patentansprüche

1. Aufhängevorrichtung für eine Abgasanlage eines Kraftwagens, bestehend aus jeweils einem am Fahrzeugaufbau (1) und an der Abgasanlage (3) starr angebrachten, im Querschnitt etwa U-förmigen Tragteil (2, 4), einem die Tragteile (2, 4) verbindenden Tragring (5) aus elastischem Werkstoff und aus zwischen freie Bereiche belassenden Anschlägen (23, 43) an den Tragteilen (2, 4) wirkenden elastischen Abstützmitteln (6), dadurch gekennzeichnet, dass das elastische Abstützmittel aus einem an einer mittig an dem fahrzeugseitigen Tragteil (2) anbringbaren, sich an diesem Tragteil (2) abstützenden Platte (71) befestigten Abstützpuffer (6) besteht.

2. Vorrichtung nach Anspruch 1, dadurch gekennzeichnet, dass an der Platte (71) rückseitig zwei parallele Schenkel (72) abgewinkelt sind.

3. Vorrichtung nach Anspruch 2, dadurch gekennzeichnet, dass die Schenkel (72) der Platte (71) zwischen den Schenkeln (22) des fahrzeugseitigen Tragteiles (2) gehalten sind.

4. Vorrichtung nach Anspruch 2, dadurch gekennzeichnet, dass aussen an den Schenkeln (72) der Platte (71) Nocken (73) angeformt sind, mit denen diese Vorrichtung an den Schenkeln (22) des fahrzeugseitigen Tragteiles (2) verrastbar ist.

5. Vorrichtung nach Anspruch 1, dadurch gekennzeichnet, dass der Abstützpuffer (6), plattenartig ausgebildet ist und an nach innen abgewinkelten Anschlägen (43) des anlageseitigen Tragteiles (4) anliegt.

## Claims

1. A mount fitting for the exhaust system of a motor vehicle consisting of respective support parts (2 and 4) which are rigidly attached to the vehicle structure (1) and the exhaust system (3) and have an approximately channel-like form, of a support ring (5) connecting the support parts (2 and 4), said ring being made of an elastic material, and of elastic support means (6) acting on the support parts (2 and 4) between abutments (23 and 43), said abutments leaving free areas, characterized in that the elastic support means consists of a support cushion (6) which is attached to a plate (71) bearing on this support part (2) on the vehicle side of the fitting, said plate (71) being adapted to be secured centrally to the support part (2).

2. The fitting as claimed in claim 1, characterized in that two parallel legs (72) are bent out from plate (71) at the back.

3. The fitting as claimed in claim 2, characterized in that the legs (72) on the plate (71) are held between the legs (22) of the support part (2) on the vehicle.

4. The fitting as claimed in claim 2, characterized in that heads (73) are formed on the legs (72) of the plate (71) such heads enabling the fitting to be snapped into place on the legs (22) of the support part (2) on the vehicle side of the fitting.

5. The fitting as claimed in claim 1, characterized in that the support cushion (6) is made in the form of a plate and rests on the inwardly bent abutments (43) of the support part (4) on the engagement side of the fitting.

## Revendications

1. Dispositif de suspension pour l'installation d'échappement des véhicules automobiles, constitué par deux éléments porteurs (2, 4) montés fixes, respectivement sur le châssis (1) du véhicule et sur l'installation d'échappement (3) et présentant une section sensiblement en forme de U, par un anneau porteur (5) en matière élastique reliant les éléments porteurs (2, 4), et par des moyens d'appui élastiques (6) agissant sur des butées (23, 43) ménagées entre des zones libres des éléments porteurs (2, 4), caractérisé par le fait que les moyens d'appui élastiques se composent d'un tampon d'appui (6) fixé sur une plaque (71) pouvant être placée sur le milieu de l'élément porteur (2) qui est situé du côté du véhicule et s'appuyant sur cet élément porteur (2).

2. Dispositif selon la revendication 1, caractérisé par le fait que deux ailes parallèles (72) de la plaque (71) sont pliées en U vers l'arrière.

3. Dispositif selon la revendication 2, caractérisé par le fait que les ailes (72) de la plaque (71) sont maintenues entre les ailes (22) de l'élément porteur (2) qui est situé du côté du véhicule.

4. Dispositif selon la revendication 2, caractérisé par le fait que des boutons (73) sont formés sur l'extérieur des ailes (72) de la plaque (71) pour arrêter ce dispositif sur les ailes (22) de l'élément porteur (2) qui est situé du côté du véhicule.

5. Dispositif selon la revendication 1, caractérisé par le fait que le tampon d'appui (6) est réalisé sous la forme d'une plaque et repose sur des butées (43) repliées vers l'intérieur de l'élément porteur (4) qui est situé du côté de l'installation d'échappement.

Fig.1

Fig.2

Fig. 4

Fig. 5

Fig. 3

0 161 428